(19) Europäisches Patentamt
European Patent Office
Office européen des brevets

(11) **EP 1 742 310 A2**

(12) **EUROPÄISCHE PATENTANMELDUNG**

(43) Veröffentlichungstag:
**10.01.2007 Patentblatt 2007/02**

(51) Int Cl.:
***H01S 3/109*** *(2006.01)*

(21) Anmeldenummer: **06010574.9**

(22) Anmeldetag: **23.05.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **27.05.2005 DE 102005025128**

(71) Anmelder: **JENOPTIK Laser, Optik, Systeme GmbH**
**07745 Jena (DE)**

(72) Erfinder:
• **Hollemann, Günter, Dr.**
**07749 Jena (DE)**
• **Knoke, Stefan, Dr.**
**07745 Jena (DE)**

(74) Vertreter: **Bertram, Helmut et al**
**Patentanwälte**
**OEHMKE & KOLLEGEN**
**Neugasse 13**
**07743 Jena (DE)**

(54) **Laseranordnung und Verfahren zur Erzeugung eines Multimodebetriebes bei resonatorinterner Frequenzverdopplung**

(57) Bei einer Laseranordnung und einem Verfahren zur Erzeugung eines Multimodebetriebes bei resonatorinterner Frequenzverdopplung besteht die Aufgabe, die Beseitigung der durch die nichtlineare Kopplung zwischen den longitudinalen Moden in Folge der Summenfrequenzbildung bedingten Leistungsschwankungen mit einem einfachen Laseraufbau zu erreichen, welcher eine erhöhte thermische und mechanische Stabilität aufweist.

Zwei multimodige Spektralbereiche werden in Randbereiche des spektralen Verstärkungsbereiches eines scheibenförmigen Verstärkungsmediums gelegt, innerhalb derer Longitudinalmoden untereinander keinen Verstärkungsvorteil für räumliches Lochbrennen aufweisen, wobei ein Anschwingen eines der beiden multimodigen Spektralbereiche unterbunden wird.

EP 1 742 310 A2

Fig. 2

## Beschreibung

Die Erfindung bezieht sich auf eine Laseranordnung und ein Verfahren zur Erzeugung eines Multimodebetriebes bei resonatorinterner Frequenzverdopplung.

Dauerstrich-Festkörperlaser, die im transversalen $TEM_{00}$-Grundmode im grünen Spektralbereich emittieren, werden für viele Anwendungen benötigt, wie z. B. zum Pumpen von Ti:Saphir-Lasern, in der Holographie, der Halbleiterprozessierung oder als Beleuchtungslaser für forensische Anwendungen.

Bei Lasern mit resonatorinterner Frequenzverdopplung, die im Multimodebetrieb arbeiten, resultiert aus der nichtlinearen Kopplung zwischen den longitudinalen Moden in Folge der Summenfrequenzbildung in dem zur Frequenzverdopplung verwendeten SHG-Kristall eine deterministisch chaotische Laserdynamik. Das heißt, die Ausgangsleistung des Lasers in der zweiten Harmonischen zeigt starke zeitliche Schwankungen, typischerweise im Bereich von 10 bis 1.000 kHz mit einer Modulationstiefe bis 100% [T.Baer, J. Opt. Soc. Am. B3, 1175 (1986)]. Solche Laser sind in der Regel für viele Anwendungen unbrauchbar, da sie sehr empfindlich gegenüber kleinsten Störungen aus der Umgebung reagieren und außerdem ein bistabiles oder multistabiles Verhalten bezüglich Ausgangsleistung und Rauschen haben können.

Bekannte Lösungsansätze, mit dem diesem Problem entgegengewirkt werden soll, findet sich bei [K.I. Martin, W.A. Clarkson, D.C. Hanna, Optics Letters 21, 875 (1996)] oder in der US 5 446 749.

Der erste Ansatz verwendet einen unidirektionalen Ringlaser, der, wie für homogen verbreitete Laserlinien üblich, im Einmodenbetrieb oszillieren kann. Es ist bekannt, dass dieser Ansatz technisch sehr aufwändig ist, da für den Einrichtungsbetrieb ein resonatorinterner Faraday-Rotator verwendet werden muss.

Der zweite Ansatz gemäß der US 5 446 749 sieht die Verwendung eines langen Resonators vor, der auf einer Vielzahl von longitudinalen Moden emittiert.

Von Nachteil ist, dass ein Restrauschen bestehen bleibt, da der zu Grunde liegende Prozess des räumlichen Lochbrennens und schnell wechselnder Moden nicht beseitigt wird, sondern lediglich die Mittelung über die Leistungsbeiträge sehr vieler Moden die Rauschamplitude reduziert.

S. Erhard, A.Giesen, M.Karszewski, T.Rupp, C.Stewen, 1. Johannsen, K. Contag, OSA TOPS Vol. 26 Advanced Solid-State Lasers, Martin M.Fejer, Hagop Injeyan, and Ursula Keller (eds.), 1999 Optical Society of America erzwingen in einem Yb:YAG-Scheibenlaser mit resonatorinterner Frequenzverdopplung durch Zuhilfenahme eines Doppelbrechungsfilters und zweier Etalons longitudinalen Einmodenbetrieb. Dadurch wird zwar eine hohe Leistungsstabilität erreicht, doch verursacht die Erzwingung des Einmodenbetriebes hohe Leistungsverluste, so dass aus einer Diodenleistung von 44,5 W lediglich eine Ausgangsleistung von 6,9 W bei 515 nm erreicht werden konnte, was einem Wirkungsgrad von 16% entspricht.

Von Nachteil ist es ferner, dass für den stabilen Einmodenbetrieb ein dickes Etalon erforderlich ist, wodurch ein derartiger Laser thermisch und mechanisch sehr empfindlich reagiert. Das zeigt sich darin, dass bereits optische Weglängenänderungen von einigen Nanometern, die durch technische Störquellen (Temperatur, Raumschall, Körperschall, Luftdruckänderungen) verursacht werden, Modensprünge verursachen, die zu einem kurzzeitigen Aussetzen des Lasers führen können und technisch nur schwierig zu beherrschen sind.

Aufgabe der Erfindung ist es, eine Beseitigung der durch die nichtlineare Kopplung zwischen den longitudinalen Moden infolge der Summenfrequenzbildung bedingten Leistungsschwankungen mit einem einfachen Laseraufbau zu erreichen, welcher eine erhöhte thermische und mechanische Stabilität aufweist. Der Festkörperlaser soll ferner mit einer hohen Effektivität und einem verbesserten Rauschverhalten arbeiten, das mindestens dem von monomodigen Lasern entspricht.

Gemäß der Erfindung wird die Aufgabe durch eine Laseranordnung zur Erzeugung eines Multimodebetriebes bei resonatorinterner Frequenzverdopplung gelöst, enthaltend entlang der optischen Achse in einem durch Resonatorspiegel begrenzten Resonator,

- ein scheibenförmiges Lasermedium, das eine Verstärkungsbandbreite aufweist, die dem Wellenlängenabstand zweier auf Grund räumlichen Lochbrennens anschwingender multimodiger Spektralbereiche entspricht, wobei sich der Wellenlängenabstand $\Delta\lambda_{SHB}$ der Mittenwellenlängen der beiden Spektralbereiche ergibt zu

$$\Delta\lambda_{SHB} = \lambda_1 - \lambda_2 = \lambda_1\left(1 - \frac{2 \cdot l \cdot n_{disc}}{2 \cdot l \cdot n_{disc} + \lambda_1}\right)$$

mit $\lambda_1$, ... Mittenwellenlänge des ersten Spektralbereichs
$\lambda_2$ ... Mittenwellenlänge des zweiten Spektralbereichs

l ... Scheibendicke

$n_{disc}$ ... Brechungsindex Laserscheibe

- ein in der Neigung gegen die optische Achse einstellbares Etalon, das ein Anschwingen von einem der beiden Spektralbereiche verhindert und

- einen optisch nichtlinearen Kristall zur Frequenzverdopplung.

Das Etalon weist vorteilhafterweise eine der Scheibendicke des Lasermediums entsprechende Dicke in einem Bereich von 0,1 mm bis 1 mm und einen freien Spektralbereich auf, der dem Doppelten des Wellenlängenabstandes der Mittenwellenlängen der beiden Spektralbereiche entspricht.

Mindestens eine in dem Resonator vorgesehene Blende kann zur Erzwingung eines transversalen Grundmodebetriebs mit hoher Strahlrichtungsstabilität dienen.

Gegenstand der Erfindung ist ferner ein Verfahren zur Erzeugung eines Multimodebetriebes bei resonatorinterner Frequenzverdopplung, bei dem zwei multimodige Spektralbereiche in Randbereiche des spektralen Verstärkungsbereiches eines scheibenförmigen Verstärkungsmediums gelegt sind, innerhalb derer Longitudinalmoden untereinander keinen Verstärkungsvorteil für räumliches Lochbrennen aufweisen, und bei dem ein Anschwingen eines der beiden multimodigen Spektralbereiche unterbunden wird.

Unter einem multimodigen Spektralbereich soll ein Spektralbereich verstanden werden, in dem mehrere longitudinale Moden anschwingen können.

Besonders zweckmäßige und vorteilhafte Ausgestaltungen und Weiterbildungen des erfindungsgemäßen Verfahrens ergeben sich aus den abhängigen Ansprüchen.

Die Erfindung weist einen wesentlichen Unterschied zu Festkörperlasern auf, die in einem Stehwellenresonator einen stabförmigen Laserkristall enthalten oder die als Slab-Laser konzipiert sind und bei denen der Laser auf mehreren Longitudinalmoden im Zentrum des spektralen Verstärkungsbereiches oszilliert, wobei durch das räumliche Lochbrennen ein ständiger Wechsel in der Intensität der einzelnen Moden auftritt.

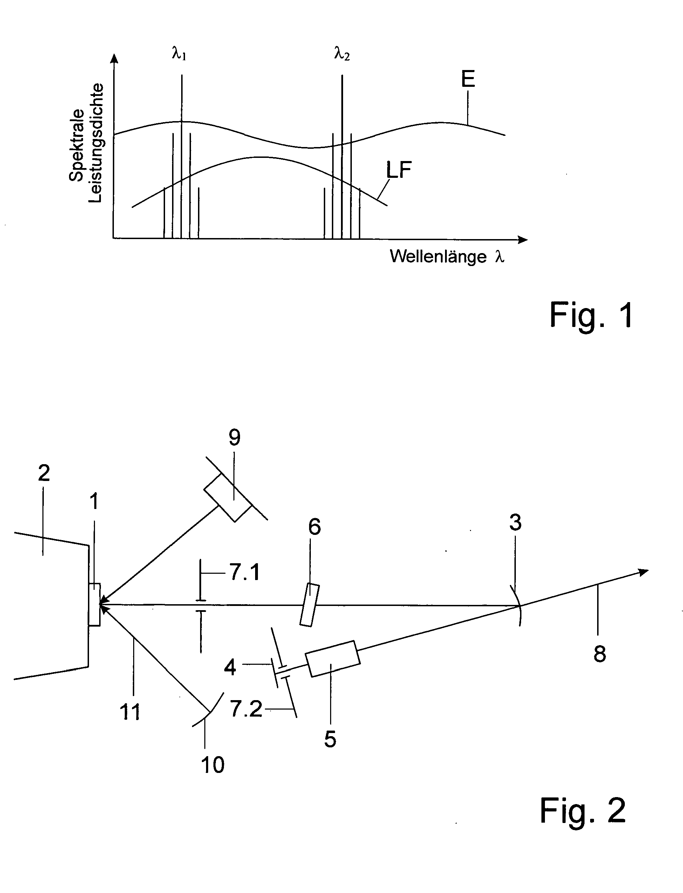

Es konnte gefunden werden, dass bei einem Festkörperlaser mit transversalem Grundmodebetrieb und resonatorinterner Frequenzverdopplung, bei dem der Laserkristall als flache Scheibe ausgebildet ist, durch Auswahl einer Laserlinie mit einer bestimmten Linienbreite des Fluoreszenzspektrums Emission in zwei Spektralbereichen im nahen Infrarot entsprechend Fig. 1 erfolgt, die jeweils in den Randbereichen des spektralen Verstärkungsbereiches liegen. In beiden Spektralbereichen oszillieren jeweils mehrere, dicht beieinander liegende Longitudinalmoden, von denen innerhalb eines Spektralbereiches keine einen Verstärkungsvorteil erreichen kann aufgrund der durch die Scheibendicke bedingten geringen Phasenverschiebung, wodurch die Anregung einer nichtlinearen Dynamik bei der Summenfrequenzmischung unterbleibt.

Hingegen besteht ein starker Wettbewerb zwischen einzelnen Longitudinalmoden des einen Spektralbereichs mit einzelnen Longitudinalmoden des anderen Spektralbereichs, so dass bei Unterdrückung von einem der beiden Spektralbereiche mittels eines dünnen Etalons überraschenderweise ein Multilongitudinalmodebetrieb resultiert, bei dem kein räumliches Lochbrennen und somit keine Modenfluktuation auftritt.

Ohne dass ein Monomodebetrieb erzwungen werden muss, wird mit der Erfindung eine sehr hohe Stabilität der praktisch rauschfreien Ausgangsleistung bei der zweiten Harmonischen erreicht.

Die mit der Erfindung verbundenen positiven Effekte weisen darauf hin, dass das räumliche Lochbrennen, mehr als bisher angenommen, zur nichtlinearen Dynamik mit chaotischen Leistungsfluktuationen bei resonatorinterner Frequenzvervielfachung beiträgt.

Da nur ein einziger, spektral weit entfernter Spektralbereich eliminiert werden muss, kann das Etalon eine geringe Dicke aufweisen, weshalb keine Temperaturstabilisierung erforderlich ist, wodurch Verluste durch das Etalon für Laserstrahlung mit Wellenlängen nahe der Transmissionsmaxima gering gehalten werden können.

Ein weiterer Vorteil des dünnen Etalons besteht darin, dass Wellenlängenänderungen durch mechanische Störungen klein sind gegen den spektralen Abstand der Transmissionsmaxima, wodurch Modensprünge in benachbarte Transmissionsmaxima unterbleiben.

Damit ist ein mechanisch äußerst robuster Betrieb des Lasers möglich.

Die Erfindung soll nachstehend anhand der schematischen Zeichnung näher erläutert werden. Es zeigen:

Fig. 1    die Ausbildung von zwei Spektralbereichen in den Kantenbereichen des Verstärkungsspektrums

Fig. 2    den Aufbau der erfindungsgemäßen diodengepumpten Festkörperlaseranordnung

Fig. 3    die Ausbildung von Stehwellen in zwei Spektralbereichen

Fig. 4    das Laserspektrum bei einer Scheibendicke des Laserkristalls von 0,3 mm und resonatorinterner Frequenzverdopplung SHG, wenn kein Etalon verwendet wird

Fig. 5    das aufgrund der Erfindung erreichte vorteilhafte Rauschverhalten als rms-Kurve

Fig. 6    die Kennlinie des erfindungsgemäßen Lasers, welche die hohe, zwanzigprozentige Effizienz des Lasers demonstriert (Diodenpumpleistung/grüne Ausgangsleistung)

Im vorliegenden Ausführungsbeispiel gemäß Fig. 2 wird ein als flache Scheibe ausgebildeter Laserkristall 1, bevorzugt ein 0,5 % dotierter Nd:YVO$_4$-Kristall mit einer Scheibendicke von 0,3 mm und einer Kantenlänge von 4 mm x 4 mm verwendet. Der Laserkristall 1 ist mit einer für Laser- und Pumpstrahlung hochreflektierend verspiegelten Scheibenrückfläche auf eine Wärmesenke 2 gelötet, wodurch gleichzeitig ein Resonatorendspiegel realisiert wird. Die Vorderfläche des Laserkristalls 1 ist antireflektierend für die Pump- und Laserwellenlänge beschichtet.

Ein gekrümmter Faltspiegel 3, beispielsweise mit einem Krümmungsradius von 300 mm, der reflektierend für die Laserwellenlänge und transmittierend für die zweite harmonische Welle beschichtet ist, und ein Endspiegel 4, der hochreflektierend ist für die Laserwellenlänge und die zweite harmonische Welle ausgebildet ist, komplettieren den Resonator.

Der Resonator enthält einen optisch nichtlinearen Kristall 5 zur Frequenzverdopplung, beispielsweise einen kritisch phasenangepassten LBO-Kristall, der eine bevorzugte Länge von 5 bis 20 mm, eine Querschnittsfläche von 3 mm x 3 mm und einen Keilwinkel zur Vermeidung eines parasitären Etaloneffekts besitzt.

Ferner enthält der Resonator ein Etalon 6, das im vorliegenden Ausführungsbeispiel aus BK7-Glas besteht, 0,3 mm dick ist und einen Durchmesser von 10 mm aufweist und das beispielsweise unter einem Winkel von 0,5° gegen die optische Achse O-O geneigt angeordnet ist. Eine oder mehrere resonatorinterne Blenden, hier die Blenden 7.1 und 7.2, erzwingen einen reinen transversalen Grundmodebetrieb und eine hohe Strahlrichtungsstabilität.
Die von dem optisch nichtlinearen Kristall 5 erzeugte zweite Harmonische verlässt den Resonator nach dem Faltspiegel 3 als Ausgangsstrahl 8.

Eine Laserdiode 9 ist als Pumpstrahlungsquelle für den scheibenförmigen Laserkristall 1 vorgesehen, wobei durch einen Pumpspiegel 10 ein Vierfachdurchgang der Pumpstrahlung 11 durch den Laserkristall 1 ermöglicht wird.

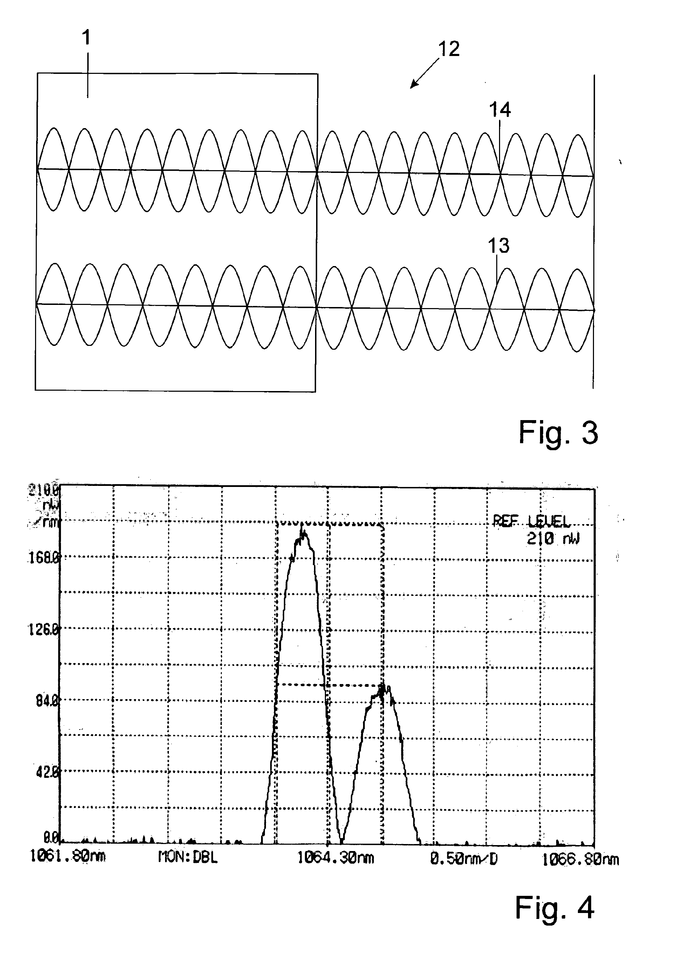

Gemäß Fig. 3, in welcher der gemäß der Erfindung als dünne Scheibe ausgebildete und in Fig. 2 näher beschriebene Laserkristall 1 zur Verdeutlichung verbreitert dargestellt ist, bilden sich in dem Resonator 12 aus energetischen Gründen zwei Stehwellen 13, 14 in zwei Spektralbereichen um die Wellenlängen $\lambda_1$ und $\lambda_2$ entsprechend Fig. 1 aus, von denen eine erste Stehwelle 13 beispielsweise einen Wellenknoten in der Mitte des Laserkristalls 1 aufweist, während sich bei der zweiten Stehwelle 14 der Wellenbauch an diesem Ort befindet. Mit E ist in Fig. 1 die Transmissionskurve des gemäß der Erfindung eingesetzten Etalons 6 und mit LF die Laserfluoreszenzlinie bezeichnet.

Zwar ist die Verstärkung der beiden in den Flanken des Fluoreszenzspektrums oszillierenden Spektralbereiche geringer als im Zentrum des Fluoreszenzspektrums, doch würde bei einer alleinigen Oszillation im Maximum des Verstärkungsspektrums die Inversion in den Knoten durch die Laserwelle nicht abgebaut werden können und durch spontane Emission verloren gehen, was energetisch insgesamt ungünstiger wäre.

Der Leistungsinhalt der zwei Spektralbereiche kann auf Grund parasitärer Etaloneffekte oder durch Temperaturänderung des optisch nichtlinearen Kristalls 5 unterschiedlich sein und auch zeitlich schwanken, stets schwingen aber zwei Spektralbereiche an. Da durch den optisch nichtlinearen Kristall 5 eine Frequenzmischung der einzelnen Longitudinalmoden aus dem ersten Spektralbereich mit denen des zweiten Spektralbereichs erzeugt wird, führt dies zu starken, auf einer nichtlinearen Dynamik basierenden, Leistungsfluktuationen.

Die Erfindung sieht deshalb vor, in dem Resonator 12 bevorzugt ein Etalon 6 mit einem freien Spektralbereich einzusetzen, der etwa dem Doppelten des Abstandes der zwei, durch räumliches Lochbrennen entstehenden Spektralbereiche entspricht, welcher sich wie folgt ergibt:

$$\Delta\lambda_{SHB} = \lambda_1 - \lambda_2 = \lambda_1\left(1 - \frac{2 \cdot l \cdot n_{disc}}{2 \cdot l \cdot n_{disc} + \lambda_1}\right)$$

mit

$\Delta\lambda_{SHB}$:    Abstand der anschwingenden Spektralbereiche auf Grund des räumlichen Lochbrennens (SHB)
$\lambda_1$:    Mittenwellenlänge des ersten Spektralbereichs
$\lambda_2$:    Mittenwellenlänge des zweiten Spektralbereichs
l:    Scheibendicke
$n_{disc}$:    Brechungsindex Laserscheibe

Experimentelle Ergebnisse, die für eine Scheibendicke von 0,3 mm in Fig. 4 dargestellt sind, bestätigen den Berechnungsansatz wie folgt:

| Scheibendicke | $\Delta\lambda$, [nm], berechnet | $\Delta\lambda$ [nm], gemessen |
|---|---|---|
| 0,30 mm | 0,87 | $0,80\pm10\%$ |
| 0,33 mm | 0,79 | $0,73\pm10\%$ |

Mit einem freien Spektralbereich von

$$\Delta\nu_{FSR} = \frac{c}{2 \cdot L \cdot n_{etalon}}$$

mit L ... Dicke des Etalons und $n_{etalon}$ ... Brechungsindex Etalon ergibt sich bei einem doppelten Abstand der zwei Spektralbereiche

$$\Delta\nu_{FSR} = 2 \cdot \Delta\nu_{SHB} = 2 \cdot \frac{c \cdot \Delta\lambda_{SHB}}{\lambda_1^2}.$$

Das Etalon kann über einen zur optischen Achse gebildeten Kippwinkel entsprechend

$$\Delta\lambda_{Etalon} = -\frac{\lambda_{etalon}}{2 \cdot n_{etalon}^2} \cdot \theta^2$$

mit $\lambda_{etalon}$ ... Wellenlänge einer Transmissionslinie des Etalons und $\theta$ ... Kippwinkel abgestimmt werden.

Wird das Etalon beispielsweise zwischen $\Delta\lambda$ =1,3 nm (0,2 mm BK7 Etalon) und $\Delta\lambda$ =1,8 nm (0,3 mm BK7 Etalon), jedenfalls etwa doppelt so groß wie die Linienbreite von Nd:YVO$_4$ von 0,8 nm gewählt, kann selbst mit einem unbeschichteten BK7-Etalon ein Betrieb in nur einem Frequenzbereich erreicht werden.

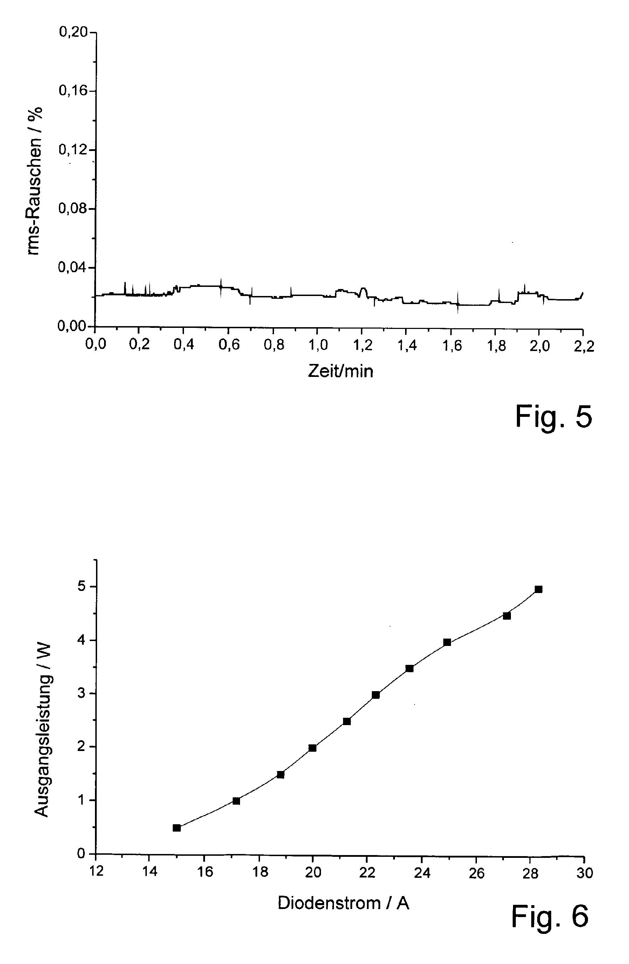

Obwohl der Laser auf mehreren (Nachbar-)Moden (1-10) oszilliert, zeigt sich gemäß Fig. 5, dass eine stabile frequenzverdoppelte Ausgangsleistung (SHG-Leistung) erreicht wird, die praktisch kein Rauschen mehr aufweist (rms-Rauschen < 0,2 Promille) und dass der Laser damit die gleichen, sonst nur bei monomodigen Lasern (Single-Frequency-Laser) bekannten hervorragenden Rauscheigenschaften aufweist.

**Patentansprüche**

1. Laseranordnung zur Erzeugung eines Multimodebetriebes bei resonatorinterner Frequenzverdopplung, enthaltend entlang der optischen Achse in einem durch Resonatorspiegel begrenzten Resonator,

   - ein scheibenförmiges Lasermedium, das eine Verstärkungsbandbreite aufweist, die dem Wellenlängenabstand zweier auf Grund räumlichen Lochbrennens anschwingender multimodiger Spektralbereiche entspricht, wobei sich der Wellenlängenabstand $\Delta\lambda_{SHB}$ der Mittenwellenlängen der beiden Spektralbereiche ergibt zu

$$\Delta\lambda_{SHB} = \lambda_1 - \lambda_2 = \lambda_1\left(1 - \frac{2 \cdot l \cdot n_{disc}}{2 \cdot l \cdot n_{disc} + \lambda_1}\right)$$

mit $\lambda_1$ ... Mittenwellenlänge des ersten Spektralbereichs

$\lambda_2$... Mittenwellenlänge des zweiten Spektralbereichs

l ... Scheibendicke

$n_{disc}$ ... Brechungsindex Laserscheibe

- ein in der Neigung gegen die optische Achse einstellbares Etalon, das ein Anschwingen von einem der beiden Spektralbereiche verhindert und
- einen optisch nichtlinearen Kristall zur Frequenzverdopplung.

**2.** Festkörperlaser nach Anspruch 1, bei dem das Etalon eine der Scheibendicke des Lasermediums entsprechende Dicke aufweist.

**3.** Festkörperlaser nach Anspruch 2, bei dem das Etalon einen freien Spektralbereich aufweist, der dem Doppelten des Wellenlängenabstandes der Mittenwellenlängen der beiden multimodigen Spektralbereiche entspricht.

**4.** Festkörperlaser nach Anspruch 2, bei dem die Dicke des Etalons im Bereich von 0,1 mm bis 1 mm liegt.

**5.** Festkörperlaser nach einem der Ansprüche 1 bis 4, bei dem in dem Resonator mindestens eine Blende zur Erzwingung eines transversalen Grundmodebetriebs mit hoher Strahlrichtungsstabilität enthalten ist.

**6.** Verfahren zur Erzeugung eines Multimodebetriebes bei resonatorinterner Frequenzverdopplung, bei dem zwei multimodige Spektralbereiche in Randbereiche des spektralen Verstärkungsbereiches eines scheibenförmigen Verstärkungsmediums gelegt sind, innerhalb derer Longitudinalmoden untereinander keinen Verstärkungsvorteil für räumliches Lochbrennen aufweisen, und bei dem ein Anschwingen eines der beiden multimodigen Spektralbereiche unterbunden wird.

**7.** Verfahren nach Anspruch 6, bei dem zur Unterbindung des Anschwingens von einem der beiden multimodigen Spektralbereiche ein Etalon verwendet wird, das eine Dicke in einem Bereich von 0,1 mm bis 1 mm aufweist.

**8.** Verfahren nach Anspruch 7, bei dem ein Etalon verwendet wird, das einen freien Spektralbereich aufweist, der dem Doppelten des Wellenlängenabstandes der Mittenwellenlängen der beiden multimodigen Spektralbereiche entspricht.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5446749 A

**In der Beschreibung aufgeführte Nicht-Patentliteratur**

- **T.BAER.** *J. Opt. Soc. Am.,* 1986, vol. B3, 1175

- Advanced Solid-State Lasers. **S. ERHARD ; A.GIESEN ; M.KARSZEWSKI ; T.RUPP ; C.STEWEN ; 1. JOHANNSEN ; K. CONTAG.** OSA TOPS. Optical Society of America, 1999, vol. 26